Europäisches Patentamt

European Patent Office

Office européen des brevets

(19)

(11) **EP 0 643 353 B1**

(12) **EUROPÄISCHE PATENTSCHRIFT**

(45) Veröffentlichungstag und Bekanntmachung des Hinweises auf die Patenterteilung:
**07.07.1999 Patentblatt 1999/27**

(51) Int Cl.⁶: **G06F 15/80**

(21) Anmeldenummer: **94113019.7**

(22) Anmeldetag: **20.08.1994**

(54) **Vorrichtung und Verfahren zur Datenverarbeitung**

Data processing system and method

Dispositif et méthode de traitement de données

(84) Benannte Vertragsstaaten:
**DE FR GB IT NL SE**

(30) Priorität: **11.09.1993 DE 4330847**

(43) Veröffentlichungstag der Anmeldung:
**15.03.1995 Patentblatt 1995/11**

(73) Patentinhaber: **ALCATEL**
**75008 Paris (FR)**

(72) Erfinder: **Jaenecke, Peter, Dr.**
**D-75334 Straubenhardt (DE)**

(74) Vertreter: **Knecht, Ulrich Karl, Dipl.-Ing. et al**
**Alcatel**
**Intellectual Property Department, Stuttgart**
**Postfach 30 09 29**
**70449 Stuttgart (DE)**

(56) Entgegenhaltungen:
**EP-A- 0 395 150**

- **NEURAL NETWORKS, Bd.5, Nr.2, 1992, OXFORD GB Seiten 305 - 311 TABARY 'Control of a redundant articulated system by neural networks'**
- **IJCNN-91 INTERNATIONAL JOINT CONFERENCE ON NEURAL NETWORKS, Bd.1, 8. Juli 1991, SEATTLE , USA Seiten 263 - 268 LO 'A neural piecewise linear classifier for pattern classification'**
- **IJCNN-91 INTERNATIONAL JOINT CONFERENCE ON NEURAL NETWORKS, Bd.2, 8. Juli 1991, SEATTLE , USA Seiten 747 - 751 RABELO 'Intelligent control of a robotic arm using hierarchical neural network systems'**
- **IEEE TRANSACTIONS ON INDUSTRIAL ELECTRONICS AND CONTROL INSTRUMENTATION, Bd.39, Nr.6, Dezember 1992, NEW YORK US Seiten 537 - 541 SAGA 'Mobile robot control by neural networks using self-supervised learning'**

**Beschreibung**

Die Erfindung betrifft eine Vorrichtung und ein Verfahren zur Datenverarbeitung für neuronale Netze.

Bei der Verwendung neuronaler Netze stellt sich im allgemeinen das Problem, daß Eingangsdaten, die ohne geeignete Vorverarbeitung auf das neuronale Netz gegeben werden, von diesem nicht optimal verarbeitet werden können.

Aus dem Stand der Technik sind mehrere Methoden zur Vorverarbeitung vor der Verarbeitung in einem neuronalen Netz bekannt. In der Patentschrift US-PS 3 287 649 wird zum Beispiel eine Vorverarbeitung beschrieben, welche nötig ist, um Eingangssignale für die Weiterverarbeitung durch Neuronen entsprechend aufzubereiten.

Desweiteren gibt es für den Fall, daß eine assoziative Speicherung vorgesehen ist, in dem Stand der Technik z.B. die Lernmatrix von STEINBUCH, mittels der unter Ausnutzung bedingter Wahrscheinlichkeiten Zuordnungen von Eingangsdaten zu Ausgangsdaten vorgenommen werden. Hierbei wird in eine "Lernphase" und in eine "Kannphase" unterteilt (Taschenbuch der Nachrichtentechnik; Dr.-Ing. K. Steinbuch; Kapitel 12.6.2 "Die Lernmatrix"; Springer-Verlag, Berlin/Heidelberg/New York; 1967; Seiten 1416 bis 1423).

Ebenso sind aus dem Stand der Technik weitere neuronale Netze und Methoden zur Datenverarbeitung mit neuronalen Netzen bekannt, bei denen jeweils ein Kodierverfahren vor der Verarbeitung der Daten angewendet werden muß. Hierbei wird beispielsweise das HOPFIELD-Netz benutzt, um eine assoziative Speicherung vorzunehmen oder um Optimierungsprobleme zu lösen ("An Introduction to Computing with Neural Nets", Richard P. Lippmann; IEEE ASSP Magazine , April 1987, S. 4-23).

Eine weitere Vorrichtung, welche zur Verarbeitung von Eingangsdaten neuronale Netze verwendet ist in "Mobile Robot Control by Neural Networks Using Self-Supervised Learning" (K.Saga et al., IEEE Transactions on Industrial Electronics, Vol.39 No.6 Dec. 1992) beschrieben. Es handelt sich um eine Robotersteuerung mit zwei neuronalen Netzen, bei der Eingangsdaten sowohl auf das erste neuronale Netz als auch auf das zweite neuronale Netz gegeben und von dem zweiten neuronalen Netz ausgewertete Daten als weitere Eingangsdaten auf das erste neuronale Netz gegeben werden. Bei den beiden neuronalen Netzen handelt es sich nicht um assoziative Speicher.

Die bisher genannten Methoden sind alle in Abhängigkeit von der jeweiligen speziellen Anwendung vorgesehen.

Das bedeutet also, daß für den vorliegenden Anwendungsfall nach jeweils einer optimalen Vorverarbeitung gesucht werden muß, und die gefundene Methode nicht universell anwendbar ist.

Es ist Aufgabe der vorliegenden Erfindung, eine Vorrichtung und ein Verfahren vorzusehen, die bzw. das universell anwendbar ist.

Die Aufgabe wird erfindungsgemäß gelöst durch die Lehre des ersten und durch die Lehre des vierten Patentanspruchs.

Ein Vorteil der Erfindung liegt darin, daß die erfindungsgemäße Vorrichtung und das Verfahren für unterschiedliche Anwendungsfälle verwendbar ist. Es muß nicht für jeden Anwendungsfall nach einer optimalen Codierung mittels eines Codierverfahrens gesucht werden, sondern die Codierung erfolgt anwendungsunabhängig. Demnach kann mittels der erfindungsgemäßen Verwendung als assoziativer Speicher und in Abhängigkeit davon, wie die Trainingsphase abläuft, z.B. entweder eine fehlertolerante Zuordnung oder aber eine eindeutige Zuordnung vorgenommen werden.

Ein weiterer Vorteil ist, daß die Erkennungssicherheit von z.B. gesuchten assoziierten Vektoren mittels eines weiteren neuronalen Netzes erhöht wird, weil ein zusätzlicher Faktor erkannt werden und übereinstimmen muß.

Vorteilhafte Weiterentwicklungen der Erfindung sind den Unteransprüchen 2 und 3 und den Unteransprüchen 5 bis 9 zu entnehmen.

Nach Unteranspruch 2 wird erläutert, daß die jeweils ausgewerteten Daten und eine Steuerinformation auf einen Entscheider S gegeben werden, welcher bestimmt, welche jeweils ausgewerteten Daten an das erste neuronale Netz gegeben werden.

Nach Unteranspruch 3 wird erläutert, daß die auf das erste neuronale Netz zu gebenden Daten von dem Entscheider berechnet werden können.

Nach Unteranspruch 5 bestehen die assoziativen Speicher aus Speichermatrixen mit nach dem Zufallsprinzip zu besetzenden Speicherplätzen.

Nach Unteranspruch 6 werden die Speicherplätze der Speichermatrixen der assoziativen Speicher nach einem Zufallsprinzip besetzt, also nicht nach einem für eine bestimmte Anwendung speziellen Verfahren.

Nach Unteranspruch 7 wird die Speichermatrix von einem der neuronalen Netze trainiert oder anwendungsspezifisch besetzt, und das andere neuronale Netz wird nach einem bekannten und vorab festgelegten Verfahren besetzt. Hierbei kann auf die aus dem Stand der Technik bekannten Verfahren zurückgegriffen werden.

Nach Unteranspruch 8 werden weitere neuronale Netze für jeweils ein spezielles Merkmal der Eingangsdaten verwendet.

Nach Unteranspruch 9 wird die erfindungsgemäße Vorrichtung verwendet, um vorzugsweise als optischer Schalter eingesetzt zu werden.

Ein Ausführungsbeispiel wird wie folgt anhand der Figuren erläutert. Folgende Figuren zeigen:

Fig. 1     Blockschaltbild eines Ausführungsbeispiels,

Fig. 2     Blockschaltbild der erfindungsgemäßen Vorrichtung,

Fig. 3 Blockschaltbild einer Vorrichtung nach Anspruch 2 oder 3,

Fig. 4 Blockschaltbild einer Kombination der Figuren 2 und 3,

Fig. 5 Kippfigur zur Verarbeitung mittels einer der Vorrichtungen.

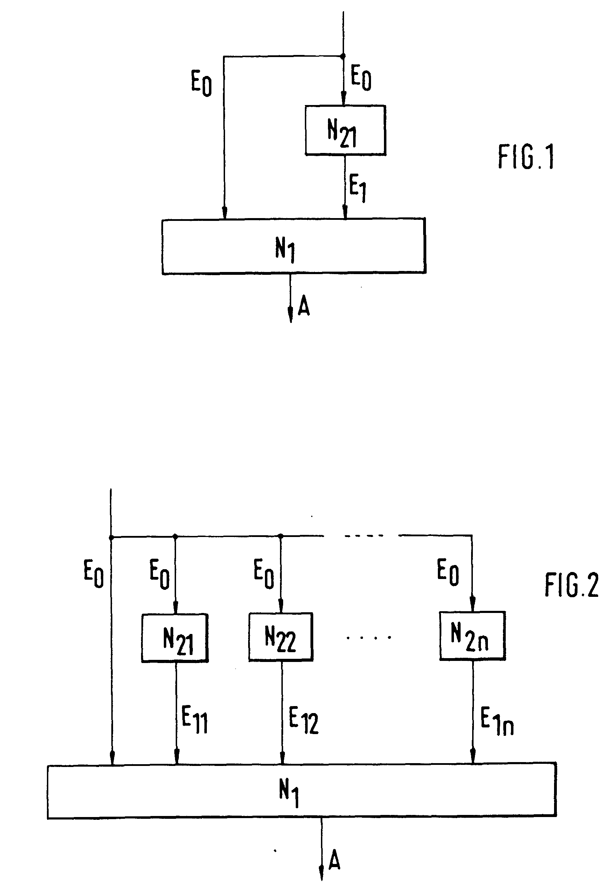

Im folgenden Teil wird die Erfindung anhand des Ausführungsbeispiels von Figur 1 näher erläutert.

Eine Vorrichtung zur Datenverarbeitung besteht aus einer Verknüpfung von neuronalen Netzen. Ein erstes neuronales Netz $N_1$ ist mit mindestens einem weiteren neuronalen Netz $N_{21}$, $N_{22}$, ..., $N_{2n}$ verknüpft, wobei in dem vorliegenden Ausführungsbeispiel lediglich ein einziges weiteres neuronales Netz $N_{21}$ vorhanden ist.

Eingangsdaten $E_0$ werden sowohl auf das erste neuronale Netz $N_1$ als auch auf das weitere neuronale Netz $N_{21}$ gegeben. Das weitere neuronale Netz $N_{21}$ wertet die Eingangsdaten $E_0$ aus, woraus dann die ausgewerten Daten $E_1$ gebildet werden, die als weitere Eingangsdaten ebenfalls auf das erste neuronale Netz $N_1$ gegeben werden.

Das erste neuronale Netz $N_1$ wertet die beiden Eingangsdaten $E_0$ und $E_1$ aus und gibt Ausgangsdaten A als Resultat heraus.

Für den Fall, daß die zuvor bezeichneten neuronalen Netze assoziative Speicher sind, ergibt sich folgender Ablauf eines Verfahrens zur Datenverarbeitung.

Bei einer assoziativen Speicherung in dem assoziativen Speicher stellt sich die Aufgabe, in einer Speichermatrix m Vektorpaare $(\vec{k_1}, \vec{q_1})$, $(\vec{k_2}, \vec{q_2})$, ... $(\vec{k_m}, \vec{q_m})$ so abzuspeichern , daß sich für den Fall, daß von den Eingangsdaten der Eingangswert $\vec{q_i}$ für i = 1, 2, ... m angelegt wird, das entsprechend dazu passende $\vec{k_i}$ für i = 1, 2, ... m ausgegeben wird, also assoziiert wird. Hierbei bedeutet "angelegt" hier und von nun an, die Multiplikation eines Vektors mit einer Matrix, sowie eien geeignete Schwellwertoperation über den resultierenden Vektor.

Bei der Verwendung neuronaler Netze müssen in einer Trainingsphase die zuvor genannten Vektorpaare trainiert werden, bevor in einer Nutzphase aus einem eingegebenen Eingangswert $\vec{q_i}$ ein resultierendes $\vec{k_i}$ gewonnen werden kann.

In der Trainingaphase wird bei dem erfindungsgemäßen Verfahren und der erfindungsgemäßen Vorrichtung zunächst durch das mindestens eine weitere neuronale Netz $N_{21}$, an das die Eingangsdaten $\vec{q_i}$ ebenfalls angelegt werden, weitere Daten $\vec{b_i}$ für i = 1, 2, .... m erzeugt. Zur Erzeugung der weiteren Daten $\vec{b_i}$ ist eine Speichermatrix des weiteren neuronalen Netzes $N_{21}$ z.B. nach einem Zufallsprinzip beliebig besetzt worden, also "zufällig" besetzt werden.

Die Vektoren $\vec{b_i}$ für i = 1, 2, ... m verlängern die entsprechenden Vektoren $\vec{q_i}$ für i = 1, 2, ... m, was im folgenden durch das Symbol "&" angezeigt wird.

Demnach ist das erste neuronale Netz $N_1$ auf die Vektorpaare $(\vec{k_1}, \vec{q_1} \& \vec{b_1})$, $(\vec{k_2}, \vec{q_2} \& \vec{b_2})$, ... $(\vec{k_m}, \vec{q_m} \& \vec{b_m})$ trainiert.

In der Nutzphase ist beispielsweise ein beliebiges $\vec{q_l}$ von den Eingangssdaten angelegt, wobei 1 gleich einer Zahl aus dem Zahlenbereich 1 bis m ist. Durch Anwendung auf das eine weitere neuronale Netz $N_{21}$ ergibt sich der entsprechende Vektor $\vec{b_l}$. Damit wird der Vektor $\vec{q_l}$ um $\vec{b_l}$ verlängert, also ergibt sich $\vec{q_l} \& \vec{b_l}$.

Mittels des ersten neuronalen Netzes $N_1$ wird der zu dem Vektor $\vec{q_l} \& \vec{b_l}$ zugehörige Vektor $\vec{k_l}$ assoziiert.

Bei dem zuvor beschriebenen Verfahren zur Datenverarbeitung mit der Vorrichtung können in Abhängigkeit von der Art des Trainings unterschiedliche Assoziationen vorgenommen werden.

Eine Möglichkeit besteht darin, mit ähnlichen Eingangavektoren $\vec{q}$ das gleiche $\vec{k}$ zu assoziieren. Dies wird verwendet für ein fehlertolerantes Verhalten bei Eingabe leicht variierender Eingabevektoren.

Eine weitere Möglichkeit besteht darin, Eindeutigkeit zu erzwingen, d. h. trotz ähnlicher Eingangsvektoren $\vec{q}$, unterschiedliche Ausgangsvektoren $\vec{k}$ zu assoziieren. Diese wird verwendet, um eine eindeutige Zuordnung der Eingangsvektoren zu den korrespondierenden Ausgangsvektoren durchzuführen.

Die Zuverlässigkeit der Zuordnung der beiden zuvor beschriebenen Möglichkeiten kann beliebig erhöht werden. Die Zuverlässigkeit wird desto größer, desto mehr Komponenten der Vektor $\vec{b_i}$ besitzt. Dies kann durch eine Erweiterung der Speichermatrix geschehen oder durch Hinzunahme eines weiteren Netzes.

Eine Hinzunahme weiterer Netze und somit eine Vergrößerung des weiteren Vektors $\vec{b_i}$ wird anhand von Figur 2 im folgenden Teil erläutert.

Die erfindungsgemäße Vorrichtung besteht, wie bereits zuvor beschrieben, aus dem ersten neuronalen Netz $N_1$ und aus mindestens einem weiteren neuronalen Netz $N_{21}$, $N_{22}$, ..., $N_{2n}$.

Auf jedes weitere neuronale Netz $N_{21}$, $N_{22}$, ..., $N_{2n}$ werden die Eingangsdaten $E_0$ gegeben. In jedem weiteren neuronalen Netz $N_{21}$, $N_{22}$, ..., $N_{2n}$ wird entsprechend ausgewertet und es werden die ausgewerteten Daten $E_{11}$, $E_{12}$, ..., $E_{1n}$ gebildet. Diese ausgewerteten Daten werden ebenfalls auf das erste neuronale Netz $N_1$ gegeben und aus dieser Vielzahl von Daten werden die Ausgangsdaten A gebildet.

Für den Fall, daß die angegebenen neuronalen Netze als assoziative Speicher ausgebildet sind, ergibt sich, daß jedes weitere neuronale Netz $N_{21}$, $N_{22}$, ..., $N_{2n}$ entsprechend einen weiteren Vektor $\vec{b_{i1}}$, $\vec{b_{i2}}$, ..., $\vec{b_{in}}$ für i = 1, 2, ... m erzeugt. Jedes weitere neuronale Netz steht hierbei z.B. für ein spezielles Merkmal der Eingangsdaten $E_o$, durch dessen Hinzunahme die Zuverlässigkeit in der Zuordnung erheblich erhöht werden kann.

Demnach wird in der Trainingsphase des neuronalen Netzes das Netz auf die Vektorpaare

$$(\vec{k}_1, \vec{q}_1 \,\&\, \vec{b}_{11} \,\&\, \vec{b}_{22} \,\&\, ... \,\vec{b}_{1n}),$$

$$(\vec{k}_2, \vec{q}_2 \,\&\, \vec{b}_{21} \,\&\, \vec{b}_{22} \,\&\, ... \,\vec{b}_{2n}), ...$$

$$(\vec{k}_m, \vec{q}_m \,\&\, \vec{b}_{m1} \,\&\, \vec{b}_{m2} \,\&\, ... \,\vec{b}_{mn})$$

trainiert. Ebenso werden in der Nutzphase zunächst die $\vec{b}_{l1}$, $\vec{b}_{l2}$, ..., $\vec{b}_{1n}$ durch Anlegen von $q_l$, wobei 1 gleich einer Zahl aus dem Zahlenbereich 1 bis m ist, an die neuronalen Netze $N_{21}$, $N_{22}$, ..., $N_{2n}$ bestimmt und dann über den Vektor $\vec{q}_l \,\&\, \vec{b}_{l1} \,\&\, \vec{b}_{l2} \,\&\, ... \,\&\, \vec{b}_{ln}$ dem zugehörigen Vektor $\vec{k}_l$ assoziiert. Dabei ist die Zuverlässigkeit der Assoziation in dem Maß erhöht, in dem weitere neuronale Netze $N_{21}$, $N_{22}$, ..., $N_{2n}$ hinzugefügt worden sind, weil aus jedem angelegten $\vec{q}_l$ der Vektor um das entsprechende $\vec{b}_{l1}$, $\vec{b}_{l2}$, ..., $\vec{b}_{ln}$ erweitert wird.

Anstelle einer zufälligen Besetzung der weiteren neuronalen Netze, könnten sie anwendungsspezifisch vortrainiert sein, wobei jedes weitere neuronale Netz für ein bestimmtes Merkmal der Eingangsdaten steht.

Ein besonderes Anwendungsgebiet für die erfindungsgemäße Vorrichtung kann die Anwendung als optischer Schalter sein. Optische Schalter werden dazu verwendet, Verbindungen zwischen unterschiedlichen Knotenpunkten herzustellen. Existieren beispielsweise 64 verschiedene Knoten, zwischen denen Verbindungen hergestellt werden können, existieren $2^{64}$ verschiedene Möglichkeiten. Von diesen $2^{64}$ Möglichkeiten ist aber nur ein Bruchteil von Bedeutung, d.h. findet überhaupt Anwendung.

Mittels der erfingungsgemäßen Vorrichtung unter Anwendung des erfindungsgemäßen Verfahrens kann Eindeutigkeit der Verbindungen der Knoten hergestellt werden. Ein Übertrainieren des Netzwerkes, wie es bei üblichen Verfahren bei der großen Anzahl an Verbindungsmöglichkeiten vorkommen würde, kann hier nicht erfolgen.

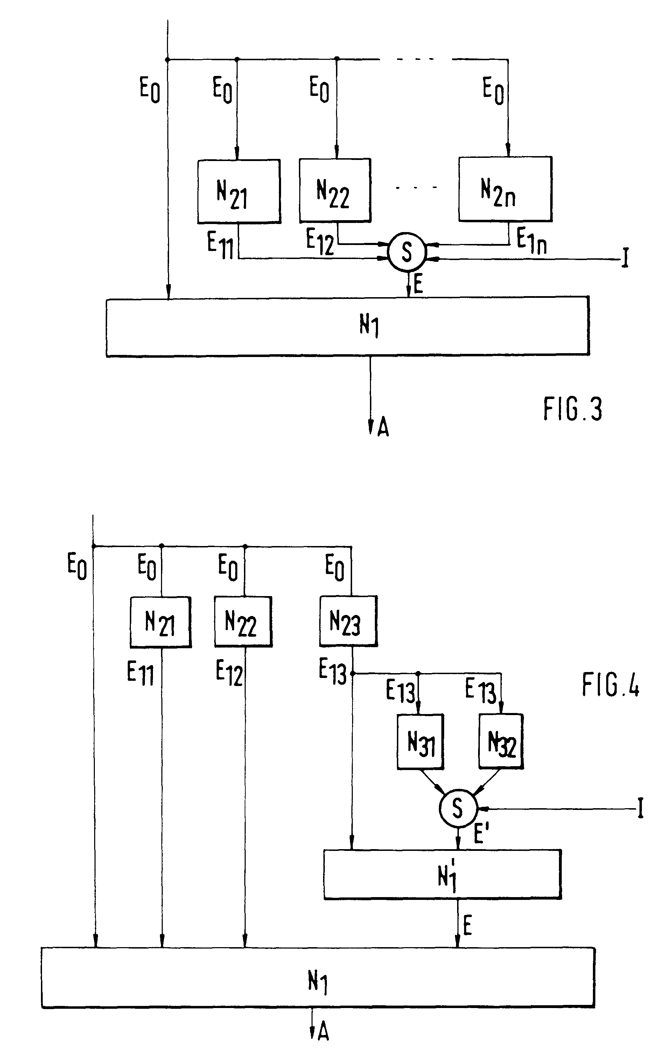

Im folgenden wird die Figur 3 erläutert. In dem vorliegenden Ausführungsbeispiel werden die von dem mindestens einen weiteren neuronalen Netz $N_{21}$, $N_{22}$, ..., $N_{2n}$ jeweils ausgewerteten Daten $E_{11}$, $E_{12}$, ..., $E_{1n}$ anstelle direkt auf das erste neuronale Netz $N_1$, auf einen Entscheider S gegeben. Diesem Entscheider werden zusätzlich noch Steuerinformationen I zugeführt. Diese Steuerinformationen I sind abhängig von der Umgebung, in der die Vorrichtung verwendet wird, entsprechen also z.B. den Anforderungen, daß eine Eindeutigkeit in einer Zuordnung erwünscht wird.

Der Entscheider S entscheidet, welche der jeweils ausgewerteten Daten $E_{11}$, $E_{12}$, ..., $E_{1n}$ an das erste neuronale Netz $N_1$, hier gekennzeichnet durch die weitergegebenen Daten E, weiter gegeben werden.

Das Vorhandensein der Steuerinformation I ist nicht zwingend notwendig, denn der Entscheider S ist ebenfalls in der Lage, selbsttätig festzustellen, welche der jeweils ausgewerteten Daten $E_{11}$, $E_{12}$, ..., $E_{1n}$ auf alle Fälle durchgelassen werden müssen.

Der Entscheider S kann hierzu entweder ebenfalls ein neuronales Netz sein, oder aber einem Abstraktor entsprechen, wie er bereits in der deutschen Patentanmeldung P 41 33 965.7 beschrieben wurde.

Desweiteren kann der Entscheider S aus den jeweils ausgewerteten Daten $E_{11}$, $E_{12}$, ..., $E_{1n}$ wiederum neue Daten E berechnen, die auf das erste neuronale Netz $N_1$ gegeben werden. Hierbei kann E, wie bereits zuvor beschrieben, einem oder mehreren der jeweils ausgewerteten Daten $E_{11}$, $E_{12}$, ..., $E_{1n}$ entsprechen, oder aber sich aus diesen ausgewerteten Daten zu neuen berechneten Daten E zusammensetzen.

Im folgenden wird die Figur 4 erläutert. Die Figur 4 stellt ein Ausführungsbeispiel dar, welches sich aus der Kombination der Figuren 2 und 3 ergibt.

Die in den Figuren 2 und 3 aufgeführten Ausführungsbeispiele sind beliebig kombinierbar; so ist ebenfalls die Kombination von jeweils zwei Figuren 2 und von zwei Figuren 3 zu jeweils einer neuen Figur möglich.

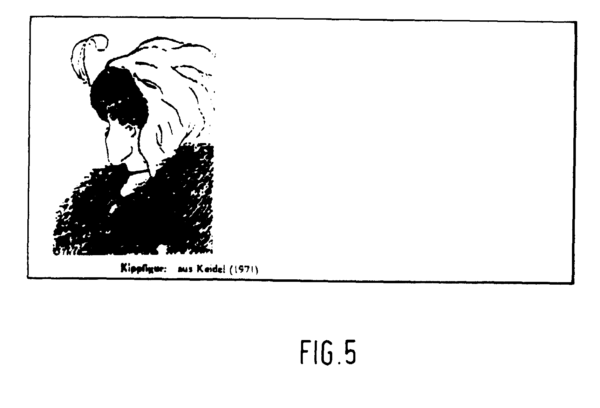

Im folgenden wird anhand von Figur 5 erläutert, wie die Auswertung im speziellen mittels einer Schaltung, z.B. nach Figur 3, erfolgt. Die Figur 5 zeigt eine sogenannte Kippfigur, die sowohl das Profil einer alten Dame als auch eine Büste einer jungen Dame darstellt. Das Sehen der jeweils alten oder jungen Dame ist abhängig von einer sogenannten Aufmerksamkeitsrichtung.

Das Sehen der jungen Dame entspricht beispielsweise der in den weiteren Daten $E_{11}$ enthaltenen Informationen aus Figur 3. Das Sehen der alten Dame entsprechend der in den weiteren Daten $E_{12}$ enthaltenen Information, ebenfalls aus Figur 3.

Diese Daten liegen gleichzeitig an dem Entscheider S an. Dieser läßt aber entsprechend der Aufmerksamkeitsrichtung nur die eine oder die andere in den Daten enthaltene Information zu dem ersten neuronalen Netz $N_1$ durch. Das erste neuronale Netz $N_1$ wiederum interpretiert die erhaltene Information.

Demnach können mit den zuvor beschriebenen Schaltungen die bei kognitiven Vorgängen wichtigen Aufmerksamkeitsrichtungen simuliert und zur Interpretation weitergeleitet werden.

**Patentansprüche**

1. Vorrichtung zur Datenverarbeitung, bestehend aus einem ersten neuronalen Netz (N1), welches ein assoziativer Speicher ist, der folgendes aufweist:

- eine Speichermatrix zur assoziativen Speicherung einer vorbestimmten Anzahl von Vektorpaaren aus jeweils einem Eingangsvektor $(\vec{q}_i)$ und einem zugehörigen Ausgangsvektor $(\vec{k}_i)$,
- ein Eingabemittel zur Eingabe eines Eingangsvektors $(\vec{q}_i)$,
- ein Mittel zur Bestimmung des zugehörigen Ausgangsvektors $(\vec{k}_i)$ durch Multiplikation des Eingangsvektors $(\vec{q}_i)$ mit der Speichermatrix und Durchführung einer Schwellenwertoperation und
- ein Ausgabemittel zur Ausgabe des zugehörigen Ausgangsvektors $(\vec{k}_i)$,

**dadurch gekennzeichnet, daß**

das erste neuronalen Netzes (N1) mit mindestens einem weiteren neuronalen Netz (N21, N22, ..., N2n), welches ebenfalls ein assoziativer Speicher von der Art des ersten neuronalen Netzes (N1) ist, in der Weise verknüpft ist, daß erste Eingangsdaten (E0) sowohl auf das erste neuronale Netz (N1) als auch auf das mindestens eine weitere neuronale Netz (N21, N22, ..., N2n) gegeben werden, und daß von dem mindestens einen weiteren neuronalen Netz (N21, N22, ..., N2n) jeweils ausgewertete Daten (E11, E12, ..., E1n) als weitere Eingangsdaten auf das erste neuronale Netz (N1) gegeben werden.

2. Vorrichtung nach Anspruch 1, bei der die jeweils ausgewerteten Daten (E11, E12, ..., E1n) auf einen Entscheider (S) gegeben werden, welcher unter Zuhilfenahme einer auf den Entscheider gegebenen Steuerinformation (I) bestimmt, welche der jeweils ausgewerteten Daten an das erste neuronale Netz (N1) gegeben werden.

3. Vorrichtung nach Anspruch 2, bei der der Entscheider (S) die auf das erste neuronale Netz (N1) zu gebenden Daten (E) aus den jeweils ausgewerteten Daten (E11, E12, ..., E1n) berechnet.

4. Verfahren zur Datenverarbeitung, bei dem erste Eingangsdaten (E0) auf ein erstes neuronales Netz (N1) gegeben werden, welches als assoziativer Speicher ausgebildet ist, der folgendes aufweist:

- eine Speichermatrix zur assoziativen Speicherung einer vorbestimmten Anzahl von Vektorpaaren aus jeweils einem Eingangsvektor $(\vec{q}_i)$ und einem zugehörigen Ausgangsvektor $(\vec{k}_i)$,
- ein Eingabemittel zur Eingabe eines Eingangsvektors $(\vec{q}_i)$,
- ein Mittel zur Bestimmung des zugehörigen Ausgangsvektors $(\vec{k}_i)$ durch Multiplikation des Eingangsvektors $(\vec{q}_i)$ mit der Speichermatrix und Durchführung einer Schwellenwertoperation und
- ein Ausgabemittel zur Ausgabe des zugehörigen Ausgangsvektors $(\vec{k}_i)$.

**dadurch gekennzeichnet, daß**

die ersten Eingangsdaten (E0) auch auf mindestens ein weiteres neuronales Netz (N21, N22, ..., N2n), das ebenfalls ein assoziativer Speicher von der Art des ersten neuronalen Netzes (N1) ist, gegeben werden, und daß in dem mindestens einen weiteren neuronalen Netz (N21, N22, ..., N2n) eine erste Auswertung der ersten Eingangsdaten (E0) erfolgt, daraus ausgewertete Daten (E11, E12, ..., E1n) erzeugt werden und diese als weitere Eingangsdaten zur weiteren Auswertung auf das erste neuronale Netz (N1) gegeben werden.

5. Verfahren nach Anspruch 4, bei dem das erste neuronale Netz (N1) und das mindestens eine weitere neuronale Netz (N21, N22, ..., N2n) jeweils als assoziativer Speicher ausgebildet sind, deren Speicherplätze nach einem Zufallsprinzip besetzt werden.

6. Verfahren nach Anspruch 5, bei dem während einer Lernphase die Speicherplätze der Speichermatrix des mindestens einen weiteren neuronalen Netzes (N21, N22, ..., N2n) nach dem Zufallsprinzip besetzt werden und die Speicherplätze der Speichermatrix des ersten neuronalen Netzes (N1) nach einem festgelegten Verfahren besetzt werden.

7. Verfahren nach Anspruch 5, bei dem während einer Lernphase die Speicherplätze der Speichermatrix des mindestens einen weiteren neuronalen Netzes (N21, N22, ..., N2n) nach einem anwendungsunabhängigen Verfahren trainiert oder anwendungsspezifisch besetzt werden, und die Speicherplätze der Speichermatrix des ersten neuronalen Netzes (N1) nach einem festgelegten Verfahren besetzt werden.

8. Verfahren nach Anspruch 4, bei dem jedes mindestens eine weitere neuronale Netz (N21, N22, ..., N2n) jeweils zur Bearbeitung eines einzelnen Merkmales der Eingangsdaten herangezogen wird.

9. Verwendung der Vorrichtung nach Anspruch 1 als optischer Schalter.

**Claims**

1. A data processing system composed of a first neural network (N1) which is an associative memory that contains the following:

- a memory matrix for the associative storage of a predetermined number of vector pairs respectively comprising one input vector $(\rightarrow q_i)$

and one pertinent output vector $(\rightarrow k_i)$,
- a means for the input of an input vector $(\rightarrow q_i)$,
- a means for determining the pertinent output vector $(\rightarrow k_i)$ by multiplying the input vector $(\rightarrow q_i)$ by the memory matrix and performing a threshold value operation, and
- a means for the output of the pertinent output vector $(\rightarrow k_i)$,

characterized in that the first neural network (N1) is connected to at least one other neural network (N21, N22, ..., N2n) which is also an associative memory of the first neural network (N1) type, in a manner so that the first input data (EO) are supplied to both the first neural network (N1) and the at least one other neural network (N21, N22, ..., N2n), where data (E11, E12,..., E1n) which are evaluated by the at least one other neural network (N21, N22, ..., N2n) are supplied as further input data to the first neural network (N1).

2. A system as claimed in claim 1, in which the respective evaluated data (E11, E12,..., E1n) are supplied to a decision element (S) which, with the aid of a control information (I) that is supplied to the decision element, determines which of the respective evaluated data are supplied to the first neural network (N1).

3. A system as claimed in claim 2, wherein the decider element (S) calculates the data (E) to be supplied to the first neural network (N1) from the respective evaluated data (E11, E12,..., E1n).

4. A data processing method in which first input data (EO) are supplied to a first neural network (N1), which is designed as an associate memory containing the following:

- a memory matrix for the associative storage of a predetermined number of vector pairs respectively comprising one input vector $(\rightarrow q_i)$ and one pertinent output vector $(\rightarrow k_i)$,
- a means for the input of an input vector $(\rightarrow q_i)$,
- a means for determining the pertinent output vector $(\rightarrow k_i)$ by multiplying the input vector $(\rightarrow q_i)$ by the memory matrix and performing a threshold value operation, and
- a means for the output of the pertinent output vector $(\rightarrow k_i)$,

characterized in that the first input data (EO) are also supplied to at least one other neural network (N21, N22, ..., N2n) which is also an associative memory of the first neural network (N1) type, and that a first evaluation of the first input data (EO) takes place in the at least one other neural network (N21, N22, ..., N2n) which thereby produces evaluated data (E11, E12,..., E1n), and where these are supplied to the first neural network (N1) as further input data for further evaluation.

5. A method as claimed in claim 4, in which the first neural network (N1) and the at least one other neural network (N21, N22, ..., N2n) are respectively designed as an associative memory whose storage places are occupied in accordance with the random principle.

6. A method as claimed in claim 5, in which during a learning phase the storage places of the memory matrix in the at least one other neural network (N21, N22, ..., N2n) are occupied in accordance with the random principle, and the storage places of the memory matrix in the first neural network (N1) are occupied according to a fixed method.

7. A method as claimed in claim 5, in which during a learning phase the storage places of the memory matrix in the at least one other neural network (N21, N22, ..., N2n) are trained according to a method that is independent of the application, or are occupied in a manner that is specific for an application, and the storage places of the memory matrix in the first neural network (N1) are occupied according to a fixed method.

8. A method as claimed in claim 4, in which every at least one other network (N21, N22, ..., N2n) is respectively used to process a single feature of the input data.

9. Use of the system claimed in claim 1 as an optical switch.

**Revendications**

1. Dispositif de traitement de données, comprenant un premier réseau neuronal (N1) qui est une mémoire associative présentant les éléments suivants :

- une mémoire matricielle pour la mémorisation associative d'un nombre prédéterminé de paires de vecteurs respectivement à partir d'un vecteur d'entrée $(\vec{q}_i)$ et d'un vecteur de sortie correspondant $(\vec{k}_i)$,
- des moyens d'entrée pour entrer un vecteur d'entrée $(\vec{q}_i)$,
- des moyens pour déterminer le vecteur de sortie correspondant $(\vec{k}_i)$ en multipliant le vecteur d'entrée $(\vec{q}_i)$ par la mémoire matricielle et en effectuant une opération de valeur de seuil, et
- des moyens de sortie pour sortir le vecteur de sortie correspondant $(\vec{k}_i)$,

caractérisé en ce que

le premier réseau neuronal (N1) est relié à au moins un réseau neuronal supplémentaire (N21, N22, ..., N2n), qui est également une mémoire associative du type du premier réseau neuronal (N1), de sorte que des premières données d'entrée (E0) sont fournies aussi bien audit premier réseau neuronal (N1) qu'audit au moins un réseau neuronal supplémentaire (N21, N22, ..., N2n), et en ce que des données respectivement évaluées (E11, E12, ..., E1n) par ledit au moins un réseau neuronal supplémentaire (N21, N22, ..., N2n) sont fournies au premier réseau neuronal (N1) comme des données d'entrée supplémentaires.

2. Dispositif selon la revendication 1, dans lequel les données évaluées respectivement (E11, E12, ..., E1n) sont fournies à un décideur (S) qui détermine à l'aide d'informations de commande (I) fournies au décideur quelles données parmi les données évaluées respectivement sont transférées au premier réseau neuronal (N1).

3. Dispositif selon la revendication 2, dans lequel le décideur (S) calcule les données (E) à fournir au premier réseau neuronal (N1) à partir des données évaluées respectivement (E11, E12, ..., E1n).

4. Procédé de traitement de données, dans lequel des premières données d'entrée (E0) sont fournies à un premier réseau neuronal (N1), qui est réalisée comme une mémoire associative présentant les éléments suivants :

   - une mémoire matricielle pour la mémorisation associative d'un nombre prédéterminé de paires de vecteurs respectivement à partir d'un vecteur d'entrée ($\vec{q}_i$) et d'un vecteur de sortie correspondant ($\vec{k}_i$),
   - des moyens d'entrée pour entrer un vecteur d'entrée ($\vec{q}_i$),
   - des moyens pour déterminer un vecteur de sortie correspondant ($\vec{k}_i$) en multipliant le vecteur d'entrée ($\vec{q}_i$) par la mémoire matricielle et en effectuant une opération de valeur de seuil, et
   - des moyens de sortie pour sortir le vecteur de sortie correspondant ($\vec{k}_i$),

   caractérisé en ce que

   les premières données d'entrée (E0) sont fournies aussi à au moins un réseau neuronal supplémentaire (N21, N22, ..., N2n), qui est également une mémoire associative du type du premier réseau neuronal (N1), et en ce que dans ledit au moins un réseau neuronal supplémentaire (N21, N22, ..., N2n), une première évaluation des premières données d'entrée (E0) est effectuée, des données évaluées (E11, E12, ..., E1n) sont produites à partir de celles-ci, et ces dernières sont fournies comme des données d'entrée supplémentaires pour une évaluation supplémentaire au premier réseau neuronal (N1).

5. Procédé selon la revendication 4, dans lequel le premier réseau neuronal (N1) et ledit au moins un réseau neuronal supplémentaire (N21, N22, ..., N2n) sont réalisés respectivement comme des mémoires associatives, dont les emplacements de mémoire sont occupés selon un principe aléatoire.

6. Procédé selon la revendication 5, dans lequel pendant une phase d'apprentissage, les emplacements de mémoire de la mémoire matricielle dudit au moins un réseau neuronal supplémentaire (N21, N22, ..., N2n) sont occupés selon le principe aléatoire et les emplacements de mémoire de la mémoire matricielle du premier réseau neuronal (N1) sont occupés selon un procédé déterminé.

7. Procédé selon la revendication 5, dans lequel pendant une phase d'apprentissage, les emplacements de mémoire de la mémoire matricielle dudit au moins un réseau neuronal supplémentaire (N21, N22, ..., N2n) sont occupés selon un procédé indépendant de l'application ou spécifique à une application, et les emplacements de la mémoire matricielle du premier réseau neuronal (N1) sont occupés selon un procédé déterminé.

8. Procédé selon la revendication 4, dans lequel chaque au moins un réseau neuronal supplémentaire (N21, N22, ..., N2n) est utilisé respectivement pour le traitement d'une caractéristique individuelle des données d'entrée.

9. Utilisation du dispositif selon la revendication 1 comme commutateur optique.

FIG.1

FIG.2

FIG.3

FIG.4

Kippfigur: aus Kendel (1971)

FIG.5